# EUROPÄISCHE PATENTSCHRIFT

(11) **EP 3 695 292 B1**
(45) Veröffentlichungstag und Bekanntmachung des Hinweises auf die Patenterteilung: **10.11.2021**
(21) Anmeldenummer: 18773957.8
(22) Anmeldetag: 12.09.2018
(51) Int. Cl.: G06F 3/01, G06F 3/0481, A63G 25/00, A63G 31/16

(54) **VERFAHREN UND SYSTEM ZUM BETREIBEN WENIGSTENS EINER VIRTUAL-REALITY-BRILLE IN EINEM KRAFTFAHRZEUG**
METHOD AND SYSTEM FOR OPERATING AT LEAST A PAIR OF VIRTUAL REALITY GLASSES IN A MOTOR VEHICLE
PROCÉDÉ ET SYSTÈME POUR UTILISER AU MOINS UNE LUNETTE DE RÉALITÉ VIRTUELLE DANS UN VÉHICULE À MOTEUR

(30) Priorität: 12.10.2017 DE 102017218214
(43) Veröffentlichungstag der Anmeldung: 19.08.2020
(73) Patentinhaber: Audi AG, 85045 Ingolstadt (DE)
(72) Erfinder: KÜHNE, Marcus, 92339 Beilngries (DE); PROFENDINER, Daniel, 85049 Ingolstadt (DE); WOLLNY, Nils, 80538 München (DE)
(86) Internationale Anmeldenummer: PCT/EP2018/074554
(87) Internationale Veröffentlichungsnummer: WO 2019/072479

(56) Entgegenhaltungen:
- KR-A- 20170 015 213
- US-A1- 2017 103 571
- US-A1- 2018 040 163

## Beschreibung

Die Erfindung betrifft ein Verfahren und ein System zum Betreiben wenigstens einer Virtual-Reality-Brille in einem Kraftfahrzeug.

Zukünftig werden immer mehr Menschen immersive Technologien in ihren Fahrzeugen nutzen, beispielsweise zur Unterstützung während der Wahrnehmung der Fahraufgabe oder aber auch einfach nur zur Unterhaltung oder zur Entspannung. Insbesondere die Nutzung von Virtual-Reality-Anwendungen in Fahrzeugen kann aber auch problematisch sein, weil dabei die so genannte Simulatorkrankheit beziehungsweise Simulator Sickness auftreten kann. Dies ist eine Art Sonderform der Kinetose, welche durch Dissonanzen von Gesehenem und der gefühlten Eigenbewegung auftreten kann. Dies bedeutet, dass ein Träger einer Virtual-Reality-Brille gegebenenfalls mittels dieser virtuelle Inhalte angezeigt bekommt, welche dem Träger visuell eine andere Bewegung suggerieren als tatsächlich aufgrund der Anordnung in einem fahrenden Fahrzeug stattfindet.

Eine bekannte Möglichkeit diesem entgegenzuwirken, ist die Hybris aus der Darstellung eigentlicher Virtual-Reality-Inhalte beziehungsweise Augmented-Reality-Inhalte mittels einer elektronischen Datenbrille und Inhalten, welche der realen Bewegung im Fahrzeug entsprechen. So zeigt die DE 10 2014 019 579 A1 beispielsweise ein Verfahren zum Betreiben einer elektronischen Datenbrille in einem Fahrzeug, bei welchem in einem ersten Bereich beispielsweise Text und in einem zweiten Bereich Inhalte dargestellt werden, welche sich entsprechend der tatsächlichen Bewegung des Fahrzeugs bewegen.

Die DE 101 56 219 C1 zeigt ein Verfahren zur Reduzierung von Kinetose-Störungen. In dem Zusammenhang wird vorgeschlagen, über optische Wiedergabeeinrichtungen während der Fahrt Bildsignale bereitzustellen, die in Abhängigkeit von der Fahrt so modifiziert werden, das für einen Passagier der visuelle Eindruck der betrachteten Bilder mit den aktuell subjektiv wahrgenommenen Lage- und Bewegungswerten korreliert ist.

Die US 2017/103571 A1 zeigt ein Virtual-Reality-System für den Einsatz in einem Fahrzeug. Die virtuellen Elemente, die auf einer Virtual-Reality-Brille angezeigt werden, werden an die Bewegungen des Fahrzeugs angepasst. Eine Route kann vorhergesagt werden, um die Erzeugung der virtuellen Umgebung vorwegzunehmen. Eine identifizierte Route, die sehr oft gefahren wird, wird gespeichert, um leicht zugänglich zu sein, und die virtuellen Elemente werden a priori berechnet, um Ressourcen zu sparen.

KR 2017 0015213 A offenbart eine virtuelle Umgebung für die Passagiere eines Autos, die auf den Fenstern des Autos angezeigt wird. Der Benutzer kann eine Route und eine virtuelle Darstellung auswählen. Die virtuelle Darstellung wird an die Route des Fahrzeugs angepasst.

Zudem zeigt die DE 10 2014 214 516 A1 ganz allgemein die Verwendung einer elektronischen Datenbrille in einem Kraftfahrzeug.

Es ist die Aufgabe der vorliegenden Erfindung, eine besonders zuverlässige Möglichkeit bereitzustellen, mittels welcher verhindert werden kann, dass beim Betrieb einer Virtual-Reality-Brillen in einem fahrenden Kraftfahrzeug Trägern solcher Brillen übel wird.

Diese Aufgabe wird durch ein Verfahren sowie durch ein System zum Betreiben wenigstens einer Virtual-Reality-Brille mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben wenigstens einer Virtual-Reality-Brille in einem Kraftfahrzeug wird ein virtuelles Thema vorgegeben, welches eine bestimmte virtuelle Fortbewegungsart innerhalb einer virtuellen Umgebung definiert. Ein solches virtuelles Thema kann beispielsweise eine virtuelle Fahrt mit einem Kraftfahrzeug, einen virtuellen Flug mit einem Fluggefährt, eine virtuelle Fahrt mit einem Wasserfahrzeug oder dergleichen betreffen. Das virtuelle Thema betrifft vorzugsweise immer irgendeine Form einer bestimmten virtuellen Fortbewegungsart innerhalb einer zugehörigen virtuellen Umgebung. Das virtuelle Thema an sich kann spielerischer, informativer oder auch rein unterhaltender Natur sein. Beispielsweise wäre es auch denkbar, dass das virtuelle Thema den virtuellen Flug mittels eines fliegendes Teppichs entlang einer besonders realen Landschaft oder auch entlang einer Fantasielandschaft betrifft. Im Prinzip sind beliebige virtuelle Themen vorgebbar, welche eine bestimmte virtuelle Fortbewegungsart innerhalb einer bestimmten virtuellen Umgebung definieren.

Bei dem erfindungsgemäßen Verfahren wird nach Vorgeben des virtuellen Themas eine Route ausgewählt, deren Streckenführung am besten zum vorgegebenen virtuellen Thema passt. Während einer Fahrt entlang der ausgewählten Route werden Eigenbewegungen des Kraftfahrzeugs erfasst und die Virtual-Reality-Brille wird derart angesteuert, dass ein die Virtual-Reality-Brille tragender Fahrzeuginsasse sich entsprechend der erfassten Eigenbewegungen des Kraftfahrzeugs und entsprechend der vorgegebenen virtuellen Fortbewegungsart des vorgegebenen virtuellen Themas virtuell innerhalb der virtuellen Umgebung fortbewegt.

Es ist also erfindungsgemäß vorgesehen, dass ein Fahrzeuginsasse bei aufgesetzter Virtual-Reality-Brille sich virtuell innerhalb einer virtuellen Umgebung gemäß des vorgegebenen virtuellen Themas fortbewegt, wobei seine virtuelle Fortbewegung mit den erfassten Eigenbewegungen des Kraftfahrzeugs korreliert, während dieses entlang der realen ausgewählten Route fährt. Fährt das Kraftfahrzeug beispielsweise eine Rechtskurve, so vollführt der Träger der Virtual-Reality-Brille innerhalb der angezeigten virtuellen Umgebung auch eine Rechtkurve. Fährt das Kraftfahrzeug beispielsweise eine hügelige Landschaft auf und ab, so bewegt sich der Träger der Virtual-Reality-Brille innerhalb der angezeigten virtuellen Umgebung auch entsprechend auf und ab.

Dadurch, dass die Route so ausgewählt wird, dass deren Streckenführung am besten zum vorgegebenen virtuellen Thema passt, kann die Ansteuerung der Virtual-Reality-Brille besonders einfach erfolgen. Je nachdem, wie stark die reale Streckenführung von dem realen virtuellen Thema abweicht, ist es zwar möglich beziehungsweise erforderlich, dass die angezeigten virtuellen Inhalte, also die virtuelle Fortbewegung innerhalb der angezeigten virtuellen Umgebung, noch dynamisch an das Fahrgeschehen etwas angepasst werden müssen. Jedoch ist durch die Ähnlichkeit der ausgewählten realen Route im Vergleich zum vorgegebenen virtuellen Thema der Anpassungs- und somit Rechenaufwand bei der Ansteuerung der Virtual-Reality-Brille relativ gering.

Seitens der Virtual-Reality-Brille kann also mit einem relativ geringen Hardwareaufwand im Hinblick auf die bereitzustellende Rechen- und gegebenenfalls auch Speicherleistung sichergestellt werden, dass der Fahrzeuginsasse, der die Virtual-Reality-Brille aufgesetzt hat, sich virtuell besonders realistisch entsprechend den erfassten Eigenbewegungen des Kraftfahrzeugs innerhalb der angezeigten virtuellen Umgebung fortbewegt. Der Träger der Virtual-Reality-Brille taucht also vollständig in die angezeigte virtuelle Umgebung ein. Dadurch, dass die Virtual-Reality-Brille so angesteuert wird, dass die virtuelle Fortbewegung zumindest im Wesentlichen den erfassten Eigenbewegungen des Kraftfahrzeugs entspricht, kann sichergestellt werden, dass die eingangs erwähnte Simulator Sickness beziehungsweise Simulatorkrankheit auch bei diesbezüglich empfindlichen Nutzern nicht auftritt oder auf ein Minimum reduziert wird.

Darüber hinaus können im Wesentlichen bei beliebigen Fahrten besonders kurzweilige virtuelle Themen mittels der Virtual-Reality-Brille eingespielt werden, sodass sich ein Mehrwert bei den Fahrzeuginsassen bei der Fahrt mit dem Kraftfahrzeug ergibt. Dabei ist es nicht erforderlich, dass das Kraftfahrzeug zwangläufig auf öffentlichen Straßen unterwegs ist. Stattdessen ist es beispielsweise auch möglich, dass der Erlebnischarakter bei der Fahrt mit dem Kraftfahrzeug bei aufgesetzter Virtual-Reality-Brille stark im Vordergrund steht. In dem Fall können beispielsweise auch nicht öffentliche Straßen und somit abgesperrte Strecken mit einer passenden Streckenführung befahren werden, sodass besonders immersive Erlebnisse mittels der Virtual-Reality-Brille möglich sind.

Eine vorteilhafte Ausführungsform der Erfindung sieht vor, dass als die Route eine Route ausgewählt wird, an deren Streckenführung vorab das virtuelle Thema angepasst worden war. Vorzugsweise ist es also vorgesehen, dass das virtuelle Thema gezielt auf eine ganz bestimmte Route und ihre Streckenführung angepasst wird, noch bevor die Fahrt mit dem Kraftfahrzeug überhaupt erfolgt. Dieses angepasste virtuelle Thema, genauer ein diesbezüglich Datensatz, kann dann beispielsweise auf die Virtual-Reality-Brille oder auch auf einen anderen Speicher aufgespielt werden. In Kenntnis des vorab angepassten virtuellen Themas auf eine ganz bestimmte Route kann dann genau diese Route ausgewählt werden, entlang welcher das Kraftfahrzeug dann bewegt wird. Die sich dabei ergebenden Eigenbewegungen des Kraftfahrzeugs insbesondere im Hinblick auf Kurvenfahrten oder auch auf Bergauffahrten und Bergabfahrten sind dann besonders gut geeignet, in entsprechende virtuelle Fortbewegungen innerhalb der angezeigten virtuellen Umgebung umgesetzt zu werden.

Eine alternative vorteilhafte Ausführungsform der Erfindung sieht vor, dass als die Route eine Route ausgewählt wird, deren Kurvenverläufe am besten zum vorgegebenen virtuellen Thema passen. Zudem kann es alternativ oder zusätzlich auch vorgesehen sein, dass als die Route eine Route ausgewählt wird, deren Höhenprofil am besten zum vorgegebenen virtuellen Thema passt. Es ist also auch möglich, das ein ganz bestimmtes vorgegebenes virtuelles Thema nicht im Vorfeld an eine ganz bestimmte reale Route angepasst worden sein muss. Stattdessen ist es möglich, dass nachdem das virtuelle Thema vorgegeben worden ist, innerhalb von beispielsweise einem bestimmten Suchradius um den Standort des Kraftfahrzeugs herum eine möglichst passende Route ausgewählt wird, wobei insbesondere deren Höhenprofil und/oder Kurvenverläufe am besten zum vorgegebenen virtuellen Thema passen. Bei dieser Vorgehensweise ist es ebenfalls besonders einfach möglich, die mittels der Virtual-Reality-Brille angezeigten virtuellen Inhalte auf besonders einfache Weise dynamisch an das jeweilige Fahrgeschehen anzupassen, da die ausgewählte Route besonders gut zu dem vorgegebenen virtuellen Thema passt. Sollte das virtuelle Thema beispielsweise eine Fortbewegung innerhalb einer virtuellen Umgebung mit besonders vielen Kurven betreffen, so kann die Route so ausgewählt werden, dass diese ebenfalls eine Vielzahl von Kurven aufweist, insbesondere auch dann, wenn eine andere Route beispielsweise zu einem bestimmten Ziel verfügbar wäre, die aber wenige Kurven aufweist. Bei dieser Vorgehensweise geht es also nicht zwangsläufig darum, ein bestimmtes Ziel besonders schnell zu erreichen, stattdessen steht im Vordergrund, dass die ausgewählte Route besonders gut zum Charakter des vorgegebenen virtuellen Themas passt.

Gemäß einer weiteren vorteilhaften Ausführungsform der Erfindung ist es vorgesehen, dass mehrere virtuelle Themen zur Auswahl bereitgestellt werden, welche jeweils unterschiedliche virtuelle Fortbewegungsarten innerhalb jeweiliger virtueller Umgebungen definieren, wobei in Abhängigkeit von einer Benutzerauswahl das virtuelle Thema für die Fahrt vorgegeben wird. Der Fahrzeuginsasse kann also aus einer Vielzahl von virtuellen Themen wählen, um das für ihn passendste, z.B. unterhaltsamste, Thema auszuwählen. Entsprechend seiner Auswahl erfolgt dann wiederum gemäß den oben genannten Vorgehensweisen die Auswahl einer möglichst passenden Route.

Eine weitere vorteilhafte Ausführungsform der Erfindung sieht vor, dass das Kraftfahrzeug die ausgewählte Route teilautonom oder vollautonom abfährt. Insbesondere in letzterem Fall ist es je nach befahrener Route unter Umständen gar nicht notwendig, dass ein Fahrer im Kraftfahrzeug sitzt. Unabhängig davon, ob das Kraftfahrzeug die ausgewählte Route teilautonom, vollautonom oder manuell abfährt, kann das Verfahren beispielsweise von Mobilitäts-Dienstleitungsanbietern, wie beispielsweise Taxiunternehmen oder dergleichen als Zusatzdienstleistung angeboten werden. Solche Mobilitäts-Dienstleitungsanbieter könnten ihre Fahrzeuge mit einer entsprechenden Technologie ausstatten, um sich über das Angebot des erfindungsgemäßen Verfahrens oder einer vorteilhaften Ausführungsform des erfindungsgemäßen Verfahrens von Wettbewerbern zu differenzieren und zusätzliche Erlösquellen zu schaffen.

Besonders vorteilhaft ist es, wenn das Verfahren in Form einer Dienstleistung gebucht wird. Mit anderen Worten kann das Verfahren also als Dienstleistung angeboten und gebucht werden. Dadurch ergeben sich die vorstehend bereits genannten Vorteile. Die Buchung kann beispielsweise für das eigene Fahrzeug oder auch während einer Fahrt mit einem fremdem Fahrzeug erfolgen.

Eine weitere vorteilhafte Ausführungsform der Erfindung sieht vor, dass zumindest eine zweite Virtual-Reality-Brille derart angesteuert wird, dass ein weiterer, die zweite Virtual-Reality-Brille tragender Fahrzeuginsasse sich entsprechend der erfassten Eigenbewegungen des Kraftfahrzeugs und entsprechend der vorgegebenen virtuellen Fortbewegungsart des vorgegebenen virtuellen Themas virtuell innerhalb der virtuellen Umgebung fortbewegt. Vorzugsweise werden beide Fahrzeuginsassen erfasst und jeweilige virtuelle Repräsentationen der Fahrzeuginsassen mittels der Virtual-Reality-Brillen angezeigt. Sitzen also mehrere Fahrzeuginsassen im Kraftfahrzeug und haben jeweils eine Virtual-Reality-Brille aufgesetzt, so können sie entsprechend des bereitgestellten virtuellen Themas sich virtuell gemeinsam innerhalb beispielsweise der gleichen virtuellen Umgebung fortbewegen, dabei miteinander interagieren und jeweilige Repräsentationen voneinander in virtueller Art wahrnehmen. Es können also auch mehrere Fahrzeuginsassen von einem Start zu einem Ziel bewegt werden, währenddessen während der Fahrt ein hochimmersives Erlebnis spielerischer, informativer oder rein unterhaltender Natur für die Fahrzeuginsassen bereitgestellt wird. Wie erwähnt, können die Fahrzeuginsassen vorzugsweise sich sogar gegenseitig innerhalb der angezeigten virtuellen Umgebung sehen und es findet eine gemeinsame Interaktion entsprechend des vorgegebenen virtuellen Themas statt.

Das erfindungsgemäße System zum Betreiben wenigstens einer Virtual-Reality-Brille in einem Kraftfahrzeug ist dazu eingerichtet, ein virtuelles Thema, welches eine bestimmte virtuelle Fortbewegungsart innerhalb einer virtuellen Umgebung definiert, vorzugeben; eine Route auszuwählen, deren Streckenführung am besten zum vorgegebenen virtuellen Thema passt; anhand von während einer Fahrt entlang der ausgewählten Route erfassten Eigenbewegungen des Kraftfahrzeugs die Virtual-Reality-Brille derart anzusteuern, dass ein die Virtual-Reality-Brille tragender Fahrzeuginsasse sich entsprechend der erfassten Eigenbewegungen des Kraftfahrzeugs und entsprechend der vorgegebenen virtuellen Fortbewegungsart des vorgegebenen virtuellen Themas virtuell innerhalb der virtuellen Umgebung fortbewegt. Vorteilhafte Ausgestaltungen des erfindungsgemäßen Verfahrens sind als vorteilhafte Ausgestaltungen des erfindungsgemäßen Systems und umgekehrt anzusehen, wobei das System insbesondere Mittel zur Durchführung der Verfahrensschritte aufweist.

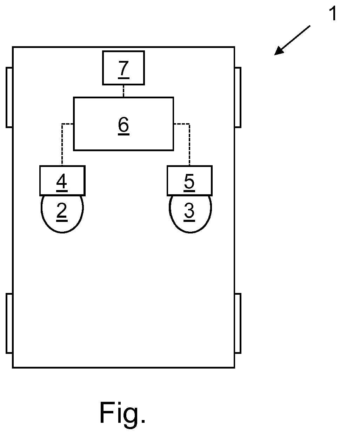

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine schematische Darstellung eines Kraftfahrzeugs, in welchem ein System zum Betreiben mehrerer Virtual-Reality-Brillen angeordnet ist.

Ein Kraftfahrzeug 1 ist in einer stark schematisierten Darstellung in der einzigen Fig. gezeigt. Im Kraftfahrzeug 1 sitzen ein zwei Fahrzeuginsassen 2, 3, welche jeweils eine Virtual-Reality-Brille 4, 5 aufgesetzt haben. Zudem ist im Kraftfahrzeug 1 ein System 6 zum Betreiben der beiden Virtual-Reality-Brillen 4, 5 angeordnet. Ferner ist noch eine Erfassungseinrichtung 7 im Kraftfahrzeug 1 angeordnet, welche dazu ausgelegt ist, Eigenbewegungen des Kraftfahrzeugs 1 während der Fahrt mit dem Kraftfahrzeug 1 zu erfassen.

Die Erfassungseinrichtung 7 kann verschiedenste Sensoren aufweisen, welche beispielsweise fahrzeugseitig verbaut sind, um Beschleunigungen, Geschwindigkeiten und dergleichen zu erfassen. Alternativ oder zusätzlich ist es auch möglich, dass die Erfassungseinrichtung 7 entgegen der vorliegenden schematischen Darstellung Teil des Systems 6 ist, wobei die Erfassungseinrichtung 7 selbst entsprechende Sensoren aufweist, die nicht fahrzeugseitig sondern systemseitig verbaut sind. Das gesamte System 6 kann auch portabel sein, muss also nicht zwangsläufig fahrzeugfest installiert sein. In dem Fall kann man sich das System 6 als eine Art tragbare elektronische Hardwarebox vorstellen.

Nachfolgend wird ein Verfahren zum Betreiben der beiden Virtual-Reality-Brillen 4, 5 näher beschrieben. Zunächst wird mittels des Systems 6 zumindest ein virtuelles Thema vorgegeben, welches eine bestimmte virtuelle Fortbewegungsart innerhalb einer virtuellen Umgebung definiert. Unter diesem virtuellen Thema kann eine ganz bestimmte Form einer virtuellen Experience verstanden werden, welche die Fahrzeuginsassen 2, 3 beispielsweise vorab oder während der Fahrt mit dem Kraftfahrzeug 1 als Dienstleitung buchen können. Beispielsweise ist es möglich, dass das Kraftfahrzeug 1 vollautonom fahren kann, sodass beide Fahrzeuginsassen 2, 3 die Virtual-Reality-Brillen 4, 5 vollkommen gefahrlos nutzen können.

Das besagte virtuelle Thema definiert eine bestimmte virtuelle Fortbewegungsart innerhalb einer bestimmten virtuellen Umgebung. Beispielsweise kann das virtuelle Thema eine virtuelle Fahrt mit einem Kraftfahrzeug, einen virtuellen Flug mit einem Fluggefährt oder aber auch eine virtuelle Fahrt mit einem Wasserfahrzeug betreffen. Grundsätzlich sind verschiedenste virtuelle Themen beziehungsweise virtuelle Experiences möglich. So ist es beispielsweise auch möglich, das als virtuelles Thema ein Flug mit einem Raumgleiter angeboten wird. Vorzugsweise beinhaltet ein jeweiliges virtuelles Thema immer eine ganz bestimmte virtuelle Fortbewegungsart, beispielsweise die Fahrt mit einem Landfahrzeug, mit einem Fluggerät oder auch beispielsweise mit einem Wasserfahrzeug, wie beispielsweise einem Schiff oder einem U-Boot innerhalb einer ganz bestimmten zugehörigen virtuellen Umgebung. Auch ist es möglich, dass das System 6 mehrere derartige Themen zur Auswahl anbieten kann, welche die Fahrzeuginsassen 2, 3 beispielsweise als kostenpflichte Dienstleistungen auswählen und buchen können.

Sobald ein ganz bestimmtes virtuelles Thema durch einen der Fahrzeuginsassen 2, 3 ausgewählt worden ist, wird eine Route ausgewählt, deren Streckenführung am besten zum entsprechend ausgewählten virtuellen Thema passt. Dabei gibt es grundsätzlich zwei unterschiedliche Vorgehensweisen.

Als die Route kann beispielsweise eine Route ausgewählt werden, an deren Streckenführung vorab das virtuelle Thema ohnehin schon angepasst worden war. In dem Fall wurde also beispielsweise schon ein Datensatz, der das virtuelle Thema betrifft, vorab auf Basis einer ganz bestimmten Streckenführung einer ganz bestimmten Route erstellt. In dem Fall kann als die Route genau diese Route ausgewählt werden, welche dann bezüglich ihrer Streckenführung besonders gut zu dem vorab angepassten virtuellen Thema passt.

Alternativ ist es aber auch möglich, dass als die Route eine Route ausgewählt wird, deren Kurvenverläufe am besten zum vorgegebenen virtuellen Thema passen, wobei zusätzlich auch noch berücksichtigt werden kann, dass ein Höhenprofil der auszuwählenden Route am besten zum vorgegebenen virtuellen Thema passt. In diesem Fall wird also zuerst ein ganz bestimmtes virtuelles Thema vorgegeben, wonach erst eine von mehreren möglichen Routen ausgewählt wird, wobei das virtuelle Thema im Vorfeld nicht schon ganz genau an die ausgewählte Route angepasst worden war. Dadurch, dass die Routenwahl insbesondere im Hinblick auf den Kurvenverlauf und auf ihr Höhenprofil so ausgewählt wird, dass die Streckenführung zum ausgewählten virtuellen Thema passt, hält sich der Aufwand für die dynamische Anpassung an die gewählte Route beim Betreiben der Virtual-Reality-Brillen 4, 5 in Grenzen.

Sobald nun das virtuelle Thema vorgegeben und eine entsprechende Route ausgewählt worden ist, fährt das Kraftfahrzeug 1 die Route ab. Dabei werden mittels der Erfassungseinrichtung 7 Eigenbewegungen des Kraftfahrzeugs 1 fortlaufend erfasst. Diesbezügliche Daten fließen in das System 6 ein, welches dann die beiden Virtual-Reality-Brillen 4, 5 derart ansteuert, dass die jeweiligen Fahrzeuginsassen 2, 3 sich entsprechend der erfassten Eigenbewegung des Kraftfahrzeugs 1 und entsprechend der vorgegebenen virtuellen Fortbewegungsart des vorgegebenen virtuellen Themas virtuell innerhalb der mittels der jeweiligen Virtual-Reality-Brillen 4, 5 angezeigten virtuellen Umgebung fortbewegen.

Fährt das Kraftfahrzeug 1 also eine enge Rechtskurve, so werden die Virtual-Reality-Brillen 4, 5 auch so angesteuert, dass es für die Fahrzeuginsassen 2, 3 so aussieht, als würden sie innerhalb der angezeigten virtuellen Umgebung ebenfalls eine starke Rechtskurve durchfahren oder sich anderweitig durch eine starke Rechtskurve hindurchbewegen. Das gleiche gilt für beliebige andere Eigenbewegungen des Kraftfahrzeugs 1. Während der Fahrt mit dem Kraftfahrzeug 1 erleben die Fahrzeuginsassen 2, 3 also mittels der Virtual-Reality-Brillen 4, 5 eine besonders realistisch anmutende virtuelle Fortbewegung innerhalb einer angezeigten virtuellen Umgebung. Zum einen wird die Fahrt mit dem Kraftfahrzeug 1 dadurch besonders kurzweilig. Zum anderen kann dadurch auch vermieden werden, dass den Fahrzeuginsassen 2, 3 trotz aufgesetzter Virtual-Reality-Brille 4, 5 übel wird. Denn die mittels der Virtual-Reality-Brillen 4, 5 angezeigten virtuellen Inhalte suggerieren visuell den Fahrzeuginsassen 2, 3 genau das, was ihre Gleichgewichtsorgane aufgrund der Eigenbewegungen des Kraftfahrzeugs 1 spüren.

Zudem ist es auch möglich, dass die beiden Fahrzeuginsassen 2, 3 beispielsweise mittels eines Kamerasystems während der Fahrt mit dem Kraftfahrzeug 1 erfasst werden, wobei jeweilige Kameradaten an das System 6 übertragen werden. Dieses steuert dann die Virtual-Reality-Brillen 4, 5 so an, dass die Fahrzeuginsassen 2, 3 mittels der aufgesetzten Virtual-Reality-Brillen 4, 5 jeweilige virtuelle Repräsentationen ihrer Mitfahrer innerhalb der angezeigten virtuellen Umgebung dargestellt bekommen. Die Fahrzeuginsassen 2, 3 können also innerhalb der mittels der Virtual-Reality-Brillen 4, 5 angezeigten virtuellen Umgebung auch sich gegenseitig über die jeweiligen virtuellen Repräsentationen sehen und auch gegebenenfalls miteinander interagieren.

Das beschriebene System 6 und das zugehörige Verfahren zum Betreiben der Virtual-Reality-Brillen 4, 5 kann beispielsweise von Taxiunternehmen oder anderen Mobilitätsdienstleistern als zusätzliche entgeltliche Dienstleistung angeboten werden. So können Fahrzeuginsassen während er Fahrt verschiedenste virtuelle Inhalte genießen, und zwar ohne dass ihnen übel wird, da die angezeigten virtuellen Inhalte mit den Eigenbewegungen des Kraftfahrzeugs während der Fahrt korrelieren.

## Patentansprüche

1. Verfahren zum Betreiben wenigstens einer Virtual-Reality-Brille (4, 5) in einem Kraftfahrzeug (1), mit den Schritten:
- Vorgeben eines virtuellen Themas, welches eine bestimmte virtuelle Fortbewegungsart innerhalb einer virtuellen Umgebung definiert;
- Auswählen einer Route, deren Streckenführung am besten zum vorgegebenen virtuellen Thema passt;
- Erfassen von Eigenbewegungen des Kraftfahrzeugs (1) während einer Fahrt entlang der ausgewählten Route und Ansteuern der Virtual-Reality-Brille (4, 5) derart, dass ein die Virtual-Reality-Brille (4, 5) tragender Fahrzeuginsasse (2, 3) sich entsprechend der erfassten Eigenbewegungen des Kraftfahrzeugs (1) und entsprechend der vorgegebenen virtuellen Fortbewegungsart des vorgegebenen virtuellen Themas virtuell innerhalb der virtuellen Umgebung fortbewegt.

2. Verfahren nach Anspruch 1,
**dadurch gekennzeichnet, dass**
das virtuelle Thema eines der folgenden virtuellen Realitäten betrifft:
- eine virtuelle Fahrt mit einem Kraftfahrzeug (1);
- ein virtueller Flug mit einem Fluggefährt;
- eine virtuelle Fahrt mit einem Wasserfahrzeug.

3. Verfahren nach Anspruch 1 oder 2,
**dadurch gekennzeichnet, dass**
als die Route eine Route ausgewählt wird, an deren Streckenführung vorab das virtuelle Thema angepasst worden war.

4. Verfahren nach Anspruch 1 oder 2,
**dadurch gekennzeichnet, dass**
als die Route eine Route ausgewählt wird, deren Kurvenverläufe am besten zum vorgegebenen virtuellen Thema passen.

5. Verfahren nach einem der Ansprüche 1, 2 oder 4,
**dadurch gekennzeichnet, dass**
als die Route eine Route ausgewählt wird, deren Höhenprofil am besten zum vorgegebenen virtuellen Thema passt.

6. Verfahren nach einem der vorhergehenden Ansprüche,
**dadurch gekennzeichnet, dass**
mehrere virtuelle Themen zur Auswahl bereitgestellt werden, welche jeweils unterschiedliche virtuelle Fortbewegungsarten innerhalb jeweiliger virtueller Umgebungen definieren, wobei in Abhängigkeit von einer Benutzerauswahl das virtuelle Thema für die Fahrt vorgegeben wird.

7. Verfahren nach einem der vorhergehenden Ansprüche,
**dadurch gekennzeichnet, dass**
das Kraftfahrzeug (1) die ausgewählte Route teilautonom oder vollautonom abfährt.

8. Verfahren nach einem der vorhergehenden Ansprüche,
**dadurch gekennzeichnet, dass**
das Verfahren in Form einer Dienstleistung gebucht wird.

9. Verfahren nach einem der vorhergehenden Ansprüche,
**dadurch gekennzeichnet, dass**
zumindest eine zweite Virtual-Reality-Brille (5) derart angesteuert wird, dass ein weiterer, die zweite Virtual-Reality-Brille (5) tragender Fahrzeuginsasse (3) sich entsprechend der erfassten Eigenbewegungen des Kraftfahrzeugs (1) und entsprechend der vorgegebenen virtuellen Fortbewegungsart des vorgegebenen virtuellen Themas virtuell innerhalb der virtuellen Umgebung fortbewegt.

10. Verfahren nach Anspruch 9,
**dadurch gekennzeichnet, dass**
beide Fahrzeuginsassen (2, 3) erfasst und jeweilige virtuelle Repräsentationen der Fahrzeuginsassen (2, 3) mittels der Virtual-Reality-Brillen (4, 5) angezeigt werden.

11. System (6) zum Betreiben wenigstens einer Virtual-Reality-Brille (4, 5) in einem Kraftfahrzeug (1), welches dazu eingerichtet ist,
- ein virtuelles Thema, welches eine bestimmte virtuelle Fortbewegungsart innerhalb einer virtuellen Umgebung definiert, vorzugeben;
- eine Route auszuwählen, deren Streckenführung am besten zum vorgegebenen virtuellen Thema passt;
- anhand von während einer Fahrt entlang der ausgewählten Route erfassten Eigenbewegungen des Kraftfahrzeugs (1) die Virtual-Reality-Brille (4, 5) derart anzusteuern, dass ein die Virtual-Reality-Brille tragender Fahrzeuginsasse (2, 3) sich entsprechend der erfassten Eigenbewegungen des Kraftfahrzeugs (1) und entsprechend der vorgegebenen virtuellen Fortbewegungsart des vorgegebenen virtuellen Themas virtuell innerhalb der virtuellen Umgebung fortbewegt.

## Claims

1. Method for operating at least one pair of virtual reality glasses (4, 5) in a motor vehicle (1), having the steps of:
- determining a virtual theme, which defines a particular virtual movement type in a virtual environment,
- selecting a route, the path of which best matches the predetermined virtual theme,
- detecting movements of the motor vehicle (1) during a journey along the selected route and controlling the virtual reality glasses (4, 5) in such a way that a vehicle occupant (2, 3) wearing the virtual reality glasses (4, 5) moves virtually in the virtual environment according to the detected movements of the motor vehicle (1) and according to the predetermined virtual movement type for the predetermined virtual theme.

2. Method according to claim 1,
**characterised in that**
the virtual theme relates to one of the following virtual realities:
- a virtual journey in a motor vehicle (1),
- a virtual flight in an aircraft,
- a virtual journey in a vessel.

3. Method according to claim 1 or 2,
**characterised in that**
a route is selected as the route, to the path of which the virtual theme had previously been adapted.

4. Method according to claim 1 or 2,
**characterised in that**
a route is selected as the route, the curve profiles of which best match the predetermined virtual theme.

5. Method according to any of claims 1, 2 or 4,
**characterised in that**
a route is selected as the route, the elevation profile of which best matches the predetermined virtual theme.

6. Method according to any of the preceding claims,
**characterised in that**
a plurality of virtual themes are made available for selection, which respectively define different virtual movement types in particular virtual environments, wherein the virtual theme for the journey is predetermined as a function of a user selection.

7. Method according to any of the preceding claims,
**characterised in that**
the motor vehicle (1) covers the selected route semi-autonomously or fully autonomously.

8. Method according to any of the preceding claims,
**characterised in that**
the method is booked in the form of a service.

9. Method according to any of the preceding claims,
**characterised in that**
at least a second pair of virtual reality glasses (5) is controlled in such a way that a further vehicle occupant (3) wearing the second pair of virtual reality glasses (5) moves virtually in the virtual environment according to the detected movements of the motor vehicle (1) and according to the predetermined virtual movement type for the predetermined virtual theme.

10. Method according to claim 9,
**characterised in that**
both vehicle occupants (2, 3) are detected and respective virtual representations of the vehicle occupants (2, 3) are displayed by means of the virtual reality glasses (4, 5).

11. System (6) for operating at least one pair of virtual reality glasses (4, 5) in a motor vehicle (1), which is configured,
- to predetermine a virtual theme, which defines a particular virtual movement type in a virtual environment,
- to select a route, the path of which best matches the predetermined virtual theme,
- to control the virtual reality glasses (4, 5) by means of movements of the motor vehicle (1) detected during a journey along the selected route in such a way that a vehicle occupant (2, 3) wearing the virtual reality glasses moves virtually in the virtual environment according to the detected movements of the motor vehicle (1) and according to the predetermined virtual movement type for the predetermined virtual theme.

## Revendications

1. Procédé de fonctionnement d'au moins une paire de lunettes de réalité virtuelle (4, 5) dans un véhicule automobile (1), avec les étapes :
- la prédéfinition d'un thème virtuel qui définit un type de déplacement virtuel déterminé dans un environnement virtuel ;
- la sélection d'un itinéraire dont le tracé du parcours convient au mieux au thème virtuel prédéfini ;
- la détection de propres mouvements du véhicule automobile (1) pendant une marche le long de l'itinéraire sélectionné et la commande des lunettes de réalité virtuelle (4, 5) de telle manière qu'un occupant de véhicule (2, 3) portant les lunettes de réalité virtuelle (4, 5) se déplace selon les propres mouvements détectés du véhicule automobile (1) et selon le type de déplacement virtuel prédéfini du thème virtuel prédéfini virtuellement dans l'environnement virtuel.

2. Procédé selon la revendication 1, **caractérisé en ce que**
le thème virtuel concerne une des réalités virtuelles suivantes :
- une marche virtuelle avec un véhicule automobile (1) ;
- un vol virtuel avec un véhicule aérien ;
- une marche virtuelle avec un véhicule marin.

3. Procédé selon la revendication 1 ou 2, **caractérisé en ce que** un itinéraire est sélectionné comme itinéraire, au tracé du parcours duquel le thème virtuel a été adapté au préalable.

4. Procédé selon la revendication 1 ou 2, **caractérisé en ce que** un itinéraire est sélectionné comme itinéraire, dont les tracés de virage conviennent au mieux au thème virtuel prédéfini.

5. Procédé selon l'une quelconque des revendications 1, 2 ou 4, **caractérisé en ce que** un itinéraire est sélectionné comme itinéraire, dont le profil vertical convient au mieux au thème virtuel prédéfini.

6. Procédé selon l'une quelconque des revendications précédentes, **caractérisé en ce que**
plusieurs thèmes virtuels sont fournis pour la sélection, lesquels définissent respectivement différents types de mouvement virtuels dans des environnements virtuels respectifs, dans lequel le thème virtuel pour la marche est prédéfini en fonction d'une sélection utilisateur.

7. Procédé selon l'une quelconque des revendications précédentes, **caractérisé en ce que**
le véhicule automobile (1) parcourt l'itinéraire sélectionné de manière partiellement autonome ou complètement autonome.

8. Procédé selon l'une quelconque des revendications précédentes, **caractérisé en ce que**
le procédé est réservé sous la forme d'une prestation de service.

9. Procédé selon l'une quelconque des revendications précédentes, **caractérisé en ce que**
au moins une seconde paire de lunettes de réalité virtuelle (5) est commandée de telle manière qu'un autre occupant de véhicule (3) portant la seconde paire de lunettes de réalité virtuelle (5) se déplace selon les propres mouvements détectés du véhicule automobile (1) et selon le type de déplacement virtuel prédéfini du thème virtuel prédéfini virtuellement dans l'environnement virtuel.

10. Procédé selon la revendication 9, **caractérisé en ce que**
les deux occupants de véhicule (2, 3) sont détectés et des représentations virtuelles respectives des occupants de véhicule (2, 3) sont affichées au moyen des lunettes de réalité virtuelle (4, 5).

11. Système (6) de fonctionnement d'au moins une paire de lunettes de réalité virtuelle (4, 5) dans un véhicule automobile (1) qui est conçu afin de
- prédéfinir un thème virtuel qui définit un type de déplacement virtuel déterminé dans un environnement virtuel ;
- sélectionner un itinéraire dont le tracé de parcours convient au mieux au thème virtuel prédéfini ;
- commander les lunettes de réalité virtuelle (4, 5) au moyen de propres mouvements détectés pendant une marche le long de l'itinéraire sélectionné du véhicule automobile (1) de telle manière qu'un occupant de véhicule (2, 3) portant les lunettes de réalité virtuelle se déplace selon les propres mouvements détectés du véhicule automobile (1) et selon le type de déplacement virtuel prédéfini du thème virtuel prédéfini virtuellement dans l'environnement virtuel.
